Europäisches Patentamt

European Patent Office

Office européen des brevets

(11) Veröffentlichungsnummer: **0 270 851**
**A1**

(12) **EUROPÄISCHE PATENTANMELDUNG**

(21) Anmeldenummer: 87116466.1

(22) Anmeldetag: 07.11.87

(51) Int. Cl.4: **A47J 43/046 , A47J 19/02**

(30) Priorität: **24.11.86 DE 3640078**

(43) Veröffentlichungstag der Anmeldung:
**15.06.88 Patentblatt 88/24**

(84) Benannte Vertragsstaaten:
**DE ES FR GB IT NL**

(71) Anmelder: **Braun Aktiengesellschaft**
**Rüsselsheimer Strasse 22**
**D-6000 Frankfurt/Main(DE)**

(72) Erfinder: **Zimmermann, Walter**
**Roda 3 St. Cugat del Valles**
**Barcelona(ES)**
Erfinder: **Rebordosa, Antonio**
**C/. Ignacio Iglesias 72 Atico 1A**
**Esplugues de Llobregat Barcelona(ES)**
Erfinder: **Pares, Pedro**
**C/. Alegria 26 Sobreàtico 2A**
**Esplugues de Llobregat Barcelona(ES)**

(54) **Anordnung zur Positionierung und lösbaren Befestigung eines Arbeitsbehälters.**

(57) Bei einer Anordnung zur Positionierung und lösbaren Befestigung eines Arbeitsbehälters (4) an einer Küchenmaschine (1), die vorzugsweise einen den rotierenden Geräteantrieb umfassenden Gerätesockel (2) aufweist, auf den ein Arbeitsbehälter (4) aufsetzbar ist, der ein mit dem Geräteantrieb kuppelbares, rotierendes Werkzeug umfaßt, sind sowohl dem Gerätesockel (2) als auch dem Arbeitsbehälter (4) Mittel zum Positionieren des Arbeitsbehälters (4) am Gerätesockel (2) zugeordnet, wobei zur lösbaren Befestigung des nur am Gerätesockel (2) unverrückbar festgelegten Arbeitsbehälters (4) an der Küchenmaschine (1) ein gerätefest angeordnetes, die funktionsgerechte Lage des Arbeitsbehälters (4) sicherndes Riegelgesperre (18) vorgesehen ist.

FIG.1

EP 0 270 851 A1

## Anordnung zur Positionierung und lösbaren Befestigung eines Arbeitsbehälters

Die Erfindung bezieht sich auf eine Anordnung zur Positionierung und lösbaren Befestigung eines Arbeitsbehälters an einer Küchenmaschine, die vorzugsweise einen den rotierenden Geräteantrieb umfassenden Gerätesockel aufweist, auf den ein Arbeitsbehälter aufsetzbar ist, der ein mit dem Geräteantrieb kuppelbares, rotierendes Werkzeug umfaßt.

Es sind derartige Küchenmaschinen bekannt, deren gegebenenfalls austauschbarer Arbeitsbehälter durch ein im Behälterboden zugeordnetes Rastgesperre, das mit entsprechenden Rastennocken, beispielsweise einer Bajonettverbindung, am Gerätesockel zusammenwirkt, an diesem festgelegt werden können. Ein solches, meist aus dem Material des Arbeitsbehälters, also aus schlagfestem Kunststoff, gebildetes Rastgesperre ist schwergängig und deshalb nur mit Mühe überwindbar. Darüber hinaus ist ein solches Rastgesperre, dessen nachgiebige Bestandteile allein der materialbedingten Eigenfederung unterliegen, einem starken Verschleiß ausgesetzt, so daß es bei oftmaligen Kuppelvorgängen schnell verschleißt und daher dann zum exakten Positionieren eines Arbeitsbehälters nicht mehr geeignet ist.

Aufgabe der Erfindung ist es daher, eine Anordnung zu schaffen, die ein exaktes Positionieren des Arbeitsbehälters und darüber hinaus eine sichere, jedoch leicht lösbare Befestigung desselben in funktionsgerechter Lage an der ihn aufnehmenden Küchenmaschine gewährleistet.

Gelöst wird diese Aufgabe dadurch, daß sowohl dem Gerätesockel als auch dem Arbeitsbehälter Mittel zum Positionieren des Arbeitsbehälters am Gerätesockel zugeordnet sind und daß zur lösbaren Befestigung des so am Gerätesockel unverrückbar festgelegten Arbeitsbehälters an der Vielzweckküchenmaschine ein gerätefest angeordnetes, die funktionsgerechte Lage des Arbeitsbehälters sicherndes Riegelgesperre vorgesehen ist.

Die hiermit erreichte Trennung der im Arbeitsbehälter positionierenden Mittel von den ihn an der Küchenmaschine lösbar befestigenden Mitteln (Riegelgesperre) ergibt den Vorteil einer besonders exakten Festlegung des Arbeitsbehälters in seiner funktionsgerechten Stellung.

Ein einfacher Aufbau bei einer leicht überschaubaren Bedienung der den Arbeitsbehälter am Gerätesockel der Küchenmaschine positionierenden Mittel ergibt sich, wenn diese Mittel aus ineinandergreifenden, hakenförmigen Ansätzen im Bereich der sockelseitigen Aufnahmeebene und aus einer dem Arbeitsbehälter angeformten, schrägen Außenwandung, die mit einer am Gerätesockel ausgebildeten Wandung korrespondiert. Der Arbeitsbehälter braucht hierbei lediglich durch Kippen in den am Gehäuse ausgebildeten, hakenförmigen Ansatz eingesetzt werden und ist bereits nach Schwenken in seine Horizontallage mit dem Gehäuse verbunden.

Mit gleichem Vorteil ist das den Arbeitsbehälter an der Küchenmaschine lösbar befestigende Riegelgesperre gebildet, das mit einem sich radial erstreckenden Sperrlappen eines den Arbeitsbehälter abschließenden Deckels im Verriegelungssinne zusammenwirkt. Sobald also der Sperrlappen mit dem Riegelgesperre in Eingrif gebracht ist, ist ein Schwenken des Arbeitsbehälters um die hakenförmigen Ansätze nicht mehr möglich, da der Deckel vom Riegelgesperre in seiner horizontalen Lage gehalten wird und somit dieser den Arbeitsbehälter sichert.

Insbesondere im Hinblick auf einen stets sicheren Betrieb der Küchenmaschine ist es von Vorteil, wenn das Riegelgesperre neben seiner der lösbaren Befestigung des Arbeitsbehälters an der Vielzweckküchenmaschine dienenden Funktion noch eine weitere, das Inbetriebsetzen des Gerätes allein bei ordnungsgemäß verschlossenem Deckel bewirkende Funktion erfüllt. Hierdurch ist ein Einschalten des Gerätes erst möglich, wenn der Deckel den Arbeitsbehälter sicher verschließt.

Der Ausübung dieser Funktion wird nun die Küchenmaschine in vorteilhafter Weise dadurch gerecht, daß das Riegelgesperre einen vom deckelseitigen Sperrlappen gesteuerten, kulissenartigen Riegel umfaßt, der in seiner vom deckelseitigen Sperrlappen nicht beeinflußten Ausgangsstellung eine dem Gesperre zugehörige Schalttaste am Niederdrücken in ihre Einschaltstellung hindert und der bei in Schließstellung verdrehtem Deckel vom deckelseitigen Sperrlappen in seine, das Freigeben der Schalttaste und damit das Niederdrücken derselben in ihre Einschaltstellung ermöglichende Entriegelungsstellung überführt wird.

Die Erfindung ist nachstehend anhand der Zeichnung in einem Ausführungsbeispiel näher erläutert. Es zeigen:

FIG. 1 eine Seitenansicht der Küchenmaschine mit auf deren Gerätesockel lose aufgesetztem Arbeitsbehälter,

FIG. 2 dieselbe Ansicht der Küchenmaschine, wie in Fig. 1 dargestellt, jedoch mit auf den Gerätesockel in funktionsgerechter Stellung aufgesetzten Arbeitsbehälter,

FIG. 3 die gleiche Ansicht der Küchenmaschine, wie in Fig. 2 dargestellt, jedoch mit auf deren Gerätesockel funktionsgerecht aufgesetztem Arbeitsbehälter und auf diesen aufgesetzten Deckel,

FIG. 4 eine Seitenansicht der Küchenmaschine mit auf den Gerätesockel funktionsgerecht aufgesetztem und in dieser Lage - einschließlich des Deckels verriegeltem Arbeitsbehälter,

FIG. 5 eine Draufsicht auf die erfindungsgemäße Küchenmaschine mit auf den Gerätesockel aufgesetztem Arbeitsbehälter und auf diesen lose aufgesetztem, jedoch mit dem Gerät noch nicht verriegeltem Deckel,

FIG. 6 eine Draufsicht auf die gleiche Küchenmaschine nach Fig. 5, jedoch mit auf deren Gerätesockel aufgesetztem Arbeitsbehälter, dessen Deckel mit dem Gerät verriegelt ist,

FIG. 7 ein mit dem Deckel des Arbeitsbehälters zusammenwirkendes Riegelgesperre in der Draufsicht und

FIG. 8 dasselbe Riegelgesperre im Längsschnitt.

Zur Vermeidung von Wiederholungen sind in den Figuren für gleiche Bauteile gleiche Bezugszeichen angegeben.

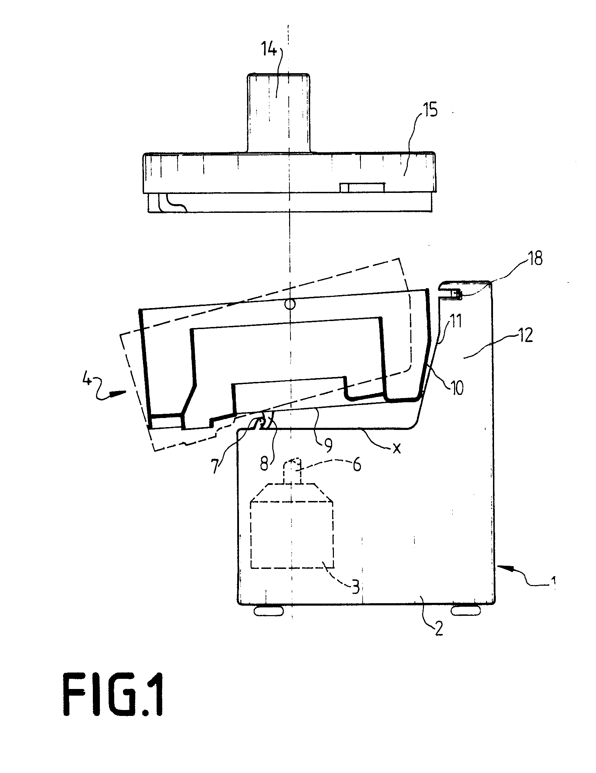

Wie insbesondere die Figuren 1 bis 4 erkennen lassen, ist die erfindungsgemäße Anordnung zur Positionierung eines Arbeitsbehälters 4 einer Küchenmaschine 1, hier einer Vielzweckküchenmaschine, zugeordnet, die einen standfesten, auf einem Arbeitstisch o. dgl. aufsetzbaren Gerätesockel 2 mit einem ihm zugehörigen, rotierenden Antrieb 3 umfaßt.

Auf den Gerätesockel 2 ist der Arbeitsbehälter 4, beispielsweise ein mit einem Rührwerk ausgestatteter Topf oder ein eine Saftzentrifuge 5 umfassendes Gefäß aufsetzbar und zwar derart, daß das Rührwerk oder die Saftzentrifuge (nicht dargestellt) beim Aufsetzen des Arbeitsbehälters 4 selbsttätig mit der Antriebswelle 6 des rotierenden Antriebs 3 gekuppelt werden bzw. nach Aufsetzen des Arbeitsbehälters 4 die Antriebswelle 6 in den Behälter 4 hineinragt und mit einem Arbeitswerkzeug bestückt werden kann.

Zum Positionieren des Arbeitsbehälters 4 an der Küchenmaschine 1 sind sowohl dem Gerätesockel 2 als auch dem Behälter 4 Mittel zugeordnet, die ein das Kuppeln der Antriebswelle 6 mit dem rotierenden Werkzeug (Rührwerk, Rotor der Saftzentrifuge 5 o. dgl.) des jeweils aufgesetzten Arbeitsbehälters 4 gewährleistetendes, unverrückbares Festlegen, also das Positionieren des Letzteren auf dem Sockel 2 der Küchenmaschine 1, garantieren.

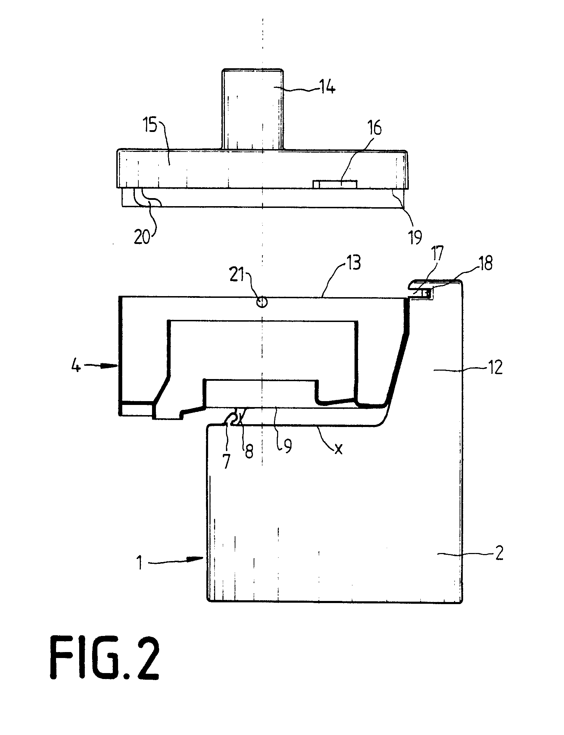

Diese Mittel bestehen hier aus einem der Aufsatzebene x zugeordneten, nach oben und geräteseitig vorspringenden, hakenförmigen Ansatz 7 am Gerätesockel 2, der mit einem in Gegenrichtung nach unten vorspringenden, hakenförmigen Ansatz 8 am Behälterboden 9 gelenkartig zusammenwirkt und so den Arbeitsbehälter 4 mit der angeformten, schrägen Außenwandung 10 gegen eine mit dieser korrespondierenden, Anschlag-und Stützfunktion ausübenden Schrägwandung 11 einer dem Gerätesockel 2 zugehörigen Tragsäule 12 anpreßt. In dieser durch das Zusammenwirken der vorstehend erläuterten Mittel 7, 8, 10 und 11 gegebenen Lage hat der Arbeitsbehälter 4 seine funktionsgerechte Position auf bzw. gegenüber dem Gerätesockel 2 der Küchenmaschine 1 eingenommen (FIG. 2).

Das Aufsetzen des Arbeitsbehälters 4 auf den Gerätesockel 2 der Küchenmaschine 1 geschieht sonach durch das "Einhaken" des behälterseitigen Ansatzes 8 in bzw. gegen den sockelseitigen Ansatz 7 (FIG. 1) und dem um dieses so gebildete "Gelenk" 7, 8 erfolgende Kippen des Behälters 4 im Uhrzeigersinne bis zum Anschlag seiner Außenwandung 10 gegen die mit dieser korrespondierenden Anschlagwandung 11 der Tragsäule 12 des Gerätesockels 2 (FIG. 2).

Die so erzeugte funktionsgerechte Position des Arbeitsbehälters 4 auf dem Sockel 2 der Küchenmaschine 1 wird durch das Aufsetzen eines zugeordneten Deckels 15 gesichert. Dieser mit einem Einfüllschacht 14 aufgestatteten Deckel 15 ist in an sich bekannter Weise durch eine elektromechanische Verriegelung an der Küchenmaschine 1 derart festgelegt, daß er nur bei nicht in Betrieb befindlicher Küchenmaschine vom Arbeitsbehälter 4 abgehoben werden kann. Diese Deckelsicherung 16 verhindert das Öffnen des Deckels 15 bei rotierendem Arbeitswerkzeug der in den Arbeitsbehälter 4 eingesetzten Saftzentrifuge 5 (nicht dargestellt).

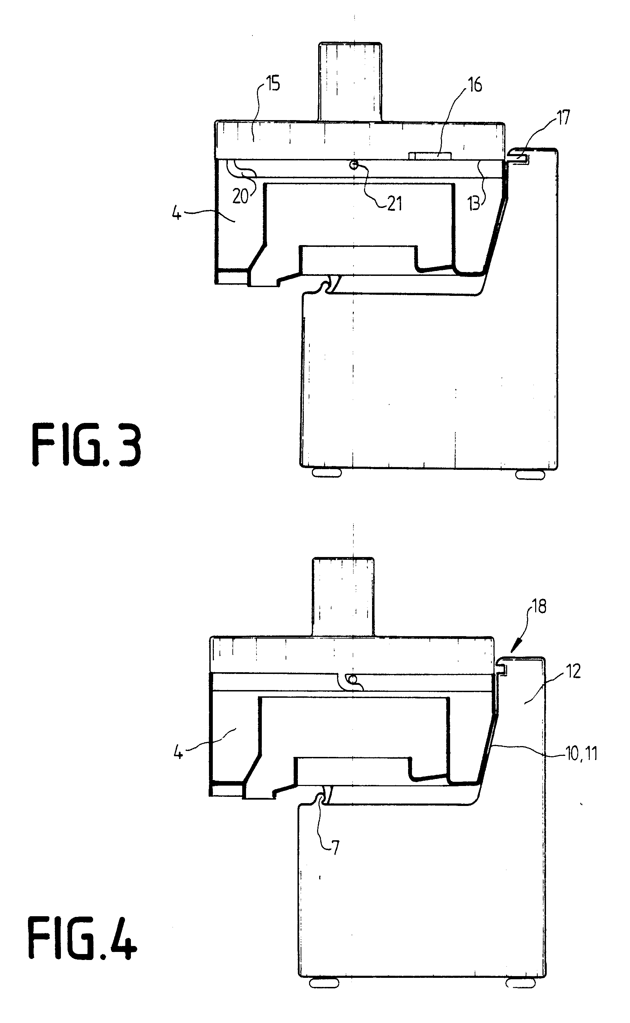

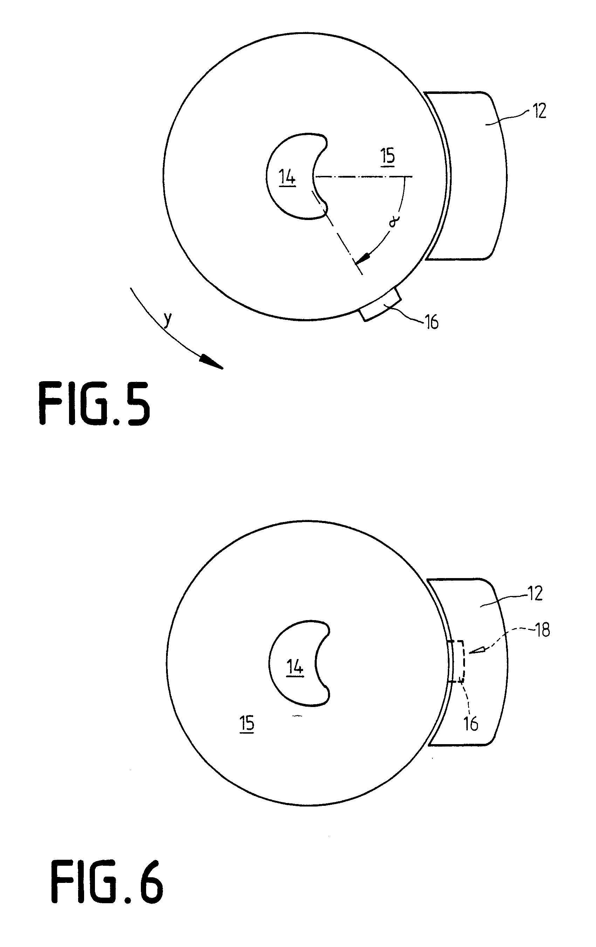

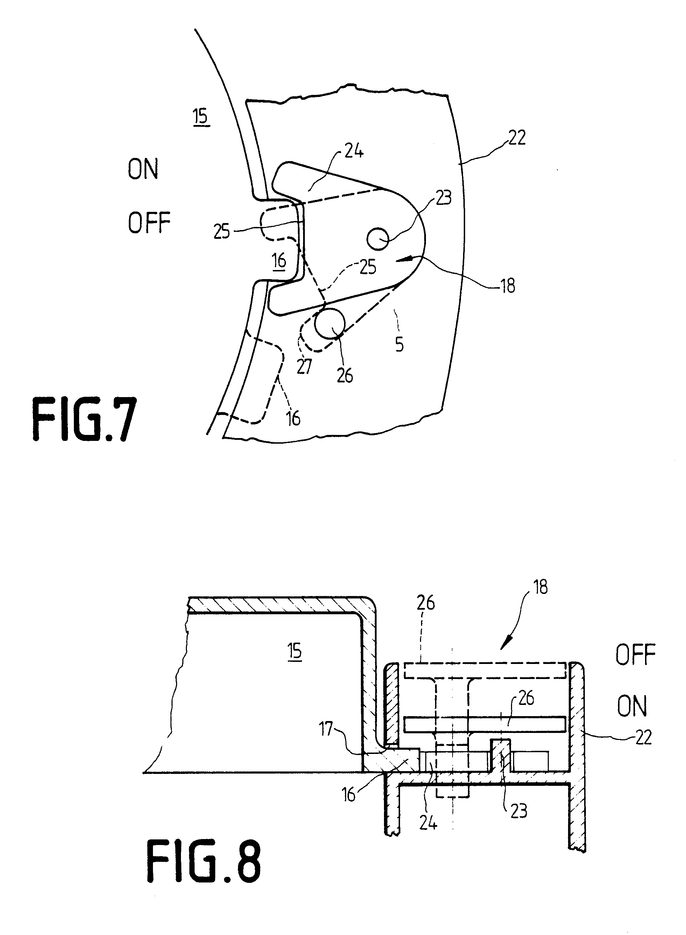

Darüber hinaus hat jedoch der Deckel 15 die Aufgabe, den auf den Gerätesockel 2 aufgesetzten Arbeitsbehälter 4 in seiner funktionsgerechten Position an der Küchenmaschine 1 festzulegen. Dies geschieht durch wenigstens einen am Deckelumfang angeformten Sperrlappen 16, der beim Aufsetzen des Deckels 15 auf den oberen Rand 13 des Behälters 4 beispielsweise die in Fig. 3 dargestellte Position einnehmen kann. Durch anschließendes Verdrehen des Deckels 15 in Pfeilrichtung Y gemäß Fig. 5 in seine in Fig. 6 dargestellte Schließposition gelangt der Sperrlappen 16 in den Bereich der schlitzförmigen Aufnahme 17 eines in der Säule 12 des Gerätesockels ausgebildeten Riegelgesperres 18 (Fig. 7 und 8). Diese Schließposition des Deckels 15 gegenüber der Küchenmaschine 1 und damit auch gegenüber dem Arbeitsbehälter 4 ist durch eine mechanische Markierung angezeigt, die hier gebildet ist durch einen dem unteren Deckelrand 19 zugeordneten Sperrhaken 20, der in der Schließstellung des Deckels 15 einen radial verlaufenden Sperrzapfen 21 des Arbeitsbehälters 4 untergreift und infolgedessen den Deckel 15 an einem Weiterdrehen über die Sperrstellung hinaus hindert. Der Deckelrand 19 kommt hierbei auf dem Oberrand 13 des Arbeitsbehälters 4 zur Auflage.

Das in den Figuren 7 und 8 in Draufsicht und im Längsschnitt dargestellte Gesperre 18 ist dem oberen Teil 22 der Tragsäule 12 des Gerätesockels 2 zugeordnet, der im Bereich des Gesperres 18 seitlich durch die schlitzförmige Aufnahme 17 offen gehalten ist. Das Oberteil 22 bildet somit eine Gehäusekammer für das Riegelgesperre 18.

Das Riegelgesperre 18 nach den Fig. 7 und 8 umfaßt nun einen um einen gerätefesten Zapfen 23 schwenkenden, kulissenartigen Sperriegel 24, der mit dem Sperrlappen 16 des Deckels 15 zusammenwirkt bzw. von ihm gesteuert wird. Wird der lose auf den Oberrand 13 des Arbeitsbehälters 4 aufgesetzte Deckel 15 aus seiner in Fig. 5 dargestellten Aufsatzstellung in Pfeilrichtung Y in seine in Fig. 6 dargestellte Schließstellung gedreht, so gelangt dessen Sperrlappen 16 aus der in Fig. 7 gestrichelt dargestellten Lage in seine durch ausgezogene Linien dargestellte Schließstellung. Dabei greift er in einen ihm zunächst zugewandten Ausschnitt 25 des kulissenartigen Riegels 24 ein und schwenkt diesen aus seiner in Fig. 7 gestrichelt dargestellten Riegelstellung in seine durch ausgezogene Linien dargestellte Freigabestellung entgegen dem Uhrzeigersinn um den gerätefesten Lagerzapfen 23.

Dieses Verschenken des kulissenartigen Riegels 24 gibt eine Schalttaste 26 frei, mit welcher der Stromkreis für den Antriebsmotor 3 durch Niederdrücken der Taste 26 freigegeben wird. Das Einschalten der Schalttaste 26 ist in Fig. 8 vom Übergang der gestrichelten Linie zur ausgezogenen Linie dargestellt. Die Küchenmaschine 1 kann in Betrieb gesetzt werden. Das Riegelgesperre 18 verhindert somit das Betätigen der Schalttaste 26 bei nicht verschlossenem Deckel 15.

**Ansprüche**

1. Anordnung zur Positionierung und lösbaren Befestigung eines Arbeitsbehälters an einer Küchenmaschine, die vorzugsweise einen den rotierenden Geräteantrieb umfassenden Gerätesockel aufweist, auf den ein Arbeitsbehälter aufsetzbar ist, der ein mit dem Geräteantrieb kuppelbares, rotierendes Werkzeug umfaßt
**dadurch gekennzeichnet,**
daß sowohl dem Gerätesockel (2) als auch dem Arbeitsbehälter (4) Mittel zum Positionieren des Arbeitsbehälters (4) am Gerätesockel (2) zugeordnet sind und daß zur lösbaren Befestigung des so am Gerätesockel (2) unverrückbar festgelegten Arbeitsbehälters (4) an der Küchenmaschine (1) ein gerätefest angeordnetes, die funktionsgerechte Lage des Arbeitsbehälters (4) sicherndes Riegelgesperre (18) vorgesehen ist.

2. Anordnung nach Anspruch 1,
**dadurch gekennzeichnet,**
daß die Mittel zum Positionieren des Arbeitsbehälters (4) am Gerätesockel (2) aus ineinandergreifenden, hakenförmigen Ansätzen (7, 8) im Bereich der sockelseitigen Aufnahmeebene (x) und aus einer dem Arbeitsbehälter (4) angeformten, schrägen Außenwandung (10), die mit einer am Gerätesockel (2) ausgebildeten Wandung (11) korrespondiert, gebildet sind.

3. Anordnung nach Anspruch 1 oder 2,
**dadurch gekennzeichnet,**
daß nach dem Positionieren des Arbeitsbehälters (4) auf dem Gerätesockel (2) der Arbeitsbehälter (4) von einem Deckel (15) verschließbar ist, daß der Deckel (15) einen Verriegelungslappen (16) aufweist, der mit dem Riegelgesperre (18) im Verriegelungssinne zusammenwirkt.

4. Anordnung nach Anspruch 2 oder 3,
**dadurch gekennzeichnet,**
daß das Riegelgesperre (18) neben seiner der lösbaren Befestigung des Arbeitsbehälters (4) an der Küchenmaschine (1) dienenden Funktion noch eine weitere, das Inbetriebsetzen des Gerätes allein bei ordnungsgemäß verschlossenem Deckel (15) bewirkende Funktion erfüllt.

5. Anordnung nach Anspruch 3 oder 4,
**dadurch gekennzeichnet,**
daß das Riegelgesperre (18) einen vom deckelseitigen Verriegelungslappen (16) gesteuerten, kulissenartigen Riegel (24) umfaßt, der in seiner Ausgangsstellung eine dem Gesperre (18) zugehörige Schalttaste (26) am Niederdrücken in ihre Einschaltstellung hindert und der bei in Schließstellung verdrehtem Deckel (15) vom deckelseitigen Sperrlappen (16) in seine das Freigeben der Schalttaste (26) und damit das Niederdrücken derselben in ihrer Einschaltstellung ermöglichende Entriegelungsstellung überführt wird.

05338

# FIG.1

05338

FIG.2

05338

FIG.3

FIG.4

05338

# FIG.5

# FIG.6

**FIG.7**

**FIG.8**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 373 677  (MATSUSHITA ELECTRIC INDUSTRIAL CO) * Insgesamt * | 1,3-5 | A 47 J  43/046 A 47 J  19/02 |
| X | FR-A-2 569 971  (BOSCH-SIEMENS HAUSGERÄTE GmbH) * Insgesamt * | 1,3-5 | |
| X | FR-A-2 545 712  (IPE NUOVA BIALETTI S.P.A.) * Insgesamt * | 1 | |
| X | FR-A-2 167 938  (RONSON CORP.) * Figuren 6-7 * | 1 | |
| X | EP-A-0 158 032  (ROBERT KRUPS STIFTUNG & CO KG) * Figur 1 * | 1 | |

| | | | RECHERCHIERTE SACHGEBIETE (Int. Cl.4) |
|---|---|---|---|
| | | | A 47 J |

Der vorliegende Recherchenbericht wurde für alle Patentansprüche erstellt

| Recherchenort | Abschlußdatum der Recherche | Prüfer |
|---|---|---|
| DEN HAAG | 01-03-1988 | GAIC P.M.Z. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
......................................................
& : Mitglied der gleichen Patentfamilie, übereinstimmendes Dokument